# EUROPEAN PATENT SPECIFICATION

(11) **EP 4 446 633 B1**
(45) Date of publication and mention of the grant of the patent: **04.11.2026**
(21) Application number: 22902870.9
(22) Date of filing: 11.08.2022
(51) Int. Cl.: F16K 31/06, F16K 1/36

(54) **ELECTROMAGNETIC VALVE**
ELEKTROMAGNETISCHES VENTIL
ÉLECTROVANNE

(30) Priority: 07.12.2021 CN 202123059788 U
(43) Date of publication of application: 16.10.2024
(73) Proprietor: Zhejiang Dunan Artificial Environment Co., Ltd., Shaoxing Zhejiang 311800 (CN)
(72) Inventor: JIN, Yong, Shaoxing, Zhejiang 311800 (CN); TIAN, Peng, Shaoxing, Zhejiang 311800 (CN); ZHANG, Lian, Shaoxing, Zhejiang 311800 (CN)
(74) Representative: Studio Torta S.p.A.
(86) International application number: PCT/CN2022/111748
(87) International publication number: WO 2023/103436

(56) References cited:
- CN-A- 101 893 098
- CN-A- 110 701 311
- CN-A- 113 883 113
- CN-A- 113 883 113
- CN-U- 201 827 383
- CN-U- 214 384 270
- CN-U- 214 384 270
- CN-U- 214 946 421
- CN-U- 214 946 421
- CN-U- 215 721 159
- CN-U- 216 382 767
- DE-A1- 102014 222 504
- JP-A- 2001 263 527

## Description

### CROSS REFERENCING OF RELETED APPLICATIONS

The present disclosure requests the priority of the Chinese application "ELECTROMAGNETIC VALVE" with application number 202123059788.8 submitted on December 7, 2021.

### TECHNICAL FIELD

The present disclosure relates to an electromagnetic valve.

### BACKGROUND

The lower end of the valve core of the existing electromagnetic valve is directly pressed against the bottom surface of the piston chamber, which has the problem of long-term impact of the valve core on the piston and easy detachment of the valve core, resulting in a reduced service life of the electromagnetic valve and even causing the valve core and other parts to fall into the system, causing malfunctions.

Documents DE102014222504 and CN113883113 disclose electromagnetic valves of the known type.

### SUMMARY

The present invention relates to an electromagnetic valve as defined in claim 1.

### BRIEF DESCRIPTION OF THE DRAWINGS

Figure 1 is a sectional view of an electromagnetic valve according to an exemplary embodiment;
Figure 2 is an enlarged schematic view of the partial structure of the electromagnetic valve shown in Figure 1;
Figure 3 is an enlarged schematic view of a partial structure of the electromagnetic valve shown according to another exemplary embodiment;
Figure 4 is an enlarged schematic view of a partial structure of the electromagnetic valve shown according to another exemplary embodiment.

### DETAILED DESCRIPTION

We will now refer to the accompanying drawings to provide a more comprehensive description of the exemplary embodiments. However, exemplary embodiments can be implemented in multiple forms and should not be understood as limited to the embodiments described herein; on the contrary, providing these embodiments will make the present disclosure comprehensive and complete, and will fully convey the concept of the exemplary embodiments to those skilled in the art. The same reference numbers in the drawings represent the same or similar structures, therefore their detailed descriptions will be omitted.

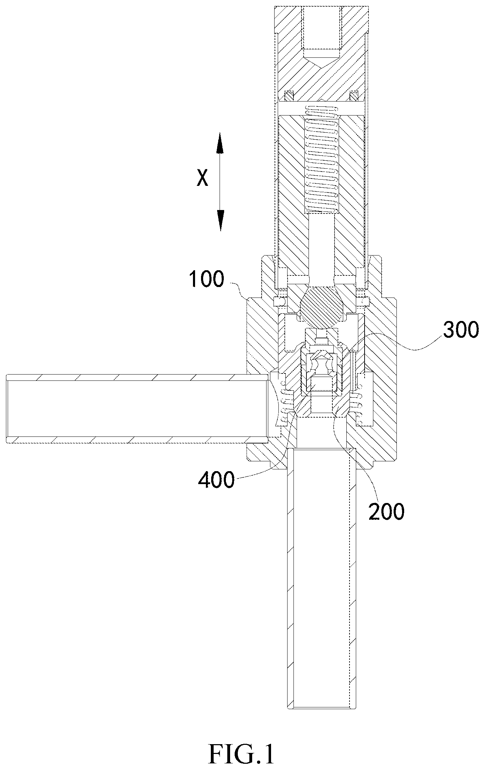

Referring to Figure 1, a representative cross-sectional view of the electromagnetic valve of the present disclosure is shown. In this exemplary embodiment, the electromagnetic valve of the present disclosure is illustrated as an example of the refrigeration equipment applied to an air conditioning system. It would be easy for those skilled in the art to understand that various modifications, additions, substitutions, deletions, or other changes are made to the following specific embodiments in order to apply the relevant designs disclosed herein to other types of equipment or systems, which are still within the scope of the principles of the electromagnetic valve of the present disclosure.

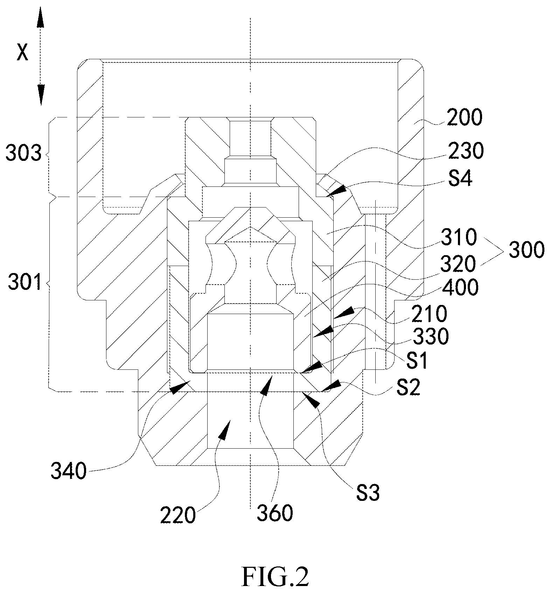

As shown in Figure 1, in an embodiment of the present disclosure, the electromagnetic valve of the present disclosure comprises a valve body 100, a piston 200, a valve core seat assembly 300, and a valve core 400. Referring to Figure 2, which is a representative enlarged schematic view of a portion of the structure of the electromagnetic valve that reflects the principles disclosed herein, and specifically illustrates the assembly structure of the piston 200, valve core seat assembly 300, and valve core 400 of the electromagnetic valve. The following will provide a detailed illustration of the structure, connection methods, and functional relationships of the main components of the electromagnetic valve of the present disclosure, in conjunction with the above drawings.

As shown in Figures 1 and 2, in an embodiment of the present disclosure, the piston 200 has a first accommodating cavity 210. The valve core seat assembly 300 is fixed in the first accommodating cavity 210, and has a second accommodating cavity 330 that opens at lower end thereof. The valve core 400 is provided in the second accommodating cavity 330, and can move along axial direction X in the second accommodating cavity 330. On this basis, the second accommodating cavity 330 has a first step surface S1 which faces upwards along the axial direction X. The first step surface S1 can abut against the lower end of the valve core 400 when the valve core 400 is located at the lower end of the second accommodating cavity 330. Due to the above structural design, the electromagnetic valve of the present disclosure can use the first step surface S1 of the valve core seat assembly 300 to limit the position of the valve core 400, avoid the valve core 400 directly abutting against the piston 200, reduce the impact of the valve core 400 on the piston 200, extend the service life of the mechanism, and also prevent the valve core 400 from falling into the system and affecting the normal operation of the system.

It should be noted that, as shown in Figure 2, in an embodiment of the present disclosure, the valve core seat assembly 300 may include a seat body 310 and a liner 320 arranged adjacent to each other from top to bottom. Specifically, the seat body 310 and the liner 320 are jointly fixed in the first accommodating cavity 210, and the seat body 310 and liner 320 jointly define the second accommodating cavity 330 of the valve core seat assembly 300. The upper end of the seat body 310 is the upper end of the valve core seat assembly 300, and the lower end of the liner 320 is the lower end of the valve core seat assembly 300. In some embodiments, the valve core seat assembly 300 is not limited to a structure that includes the seat body 310 and the liner 320, for example, it may only include the seat body 310 and is not limited to these.

As shown in Figure 2, in an embodiment disclosed herein, the lower end of the liner 320 (i.e. the lower end of the valve core seat assembly 300) is opened and bent inward to form a bending portion 340, and the upper surface of the bending portion 340 facing upwards along the axial direction X defines the first step surface S1 of the valve core seat assembly 300. Based on this, the present disclosure can achieve both impact protection for the piston 200 and limiting the position of the valve core 400 by abutting the bending part 340 against the lower end of the valve core 400.

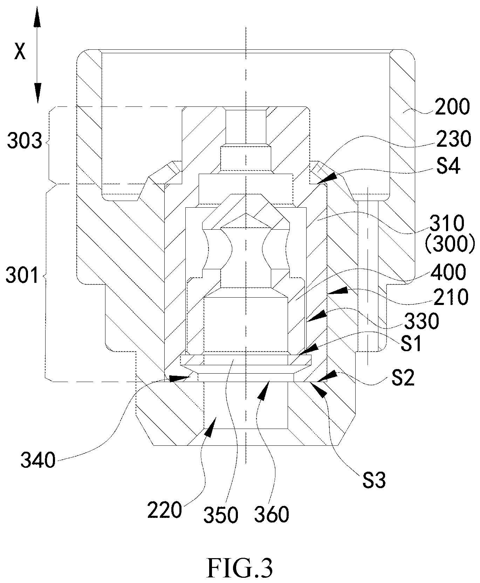

Referring to Figure 3, which is a representative enlarged schematic view of a portion of the structure of the electromagnetic valve of the present disclosure in another exemplary embodiment, and specifically illustrates the assembly structure of the piston 200, valve core seat assembly 300, and valve core 400 of the electromagnetic valve.

As shown in Figure 3, in an embodiment of the present disclosure, a washer 350 can be provided in the second accommodating cavity 330, adjacent to the lower end opening 360 of the second accommodating cavity 330. The upper surface of the washer 350 facing upwards along the axial direction X defines the first step surface S1 of the valve core seat assembly 300. Based on this, the present disclosure is able to achieve both impact protection for the piston 200 and limiting the position of the valve core 400 by abutting the washer 350 against the lower end of the valve core 400.

As shown in Figure 3, based on the structural design of the second accommodating cavity 330 provided with the washer 350, in an embodiment of the present disclosure, a mounting slot can be provided on the inner wall of the second accommodating cavity 330 adjacent to the lower end opening 360. The washer 350 is partially engaged or riveted to the mounting slot, thereby achieving the installation of the washer 350 and the valve core seat assembly 300. In some embodiments, the washer 350 can also be installed in the second accommodating cavity 330 in other ways, such as welding, etc. In addition, the washer 350 is not limited to being arranged in combination with the bending portion 340, that is, in various possible embodiments that comply with the design concept disclosed herein, it is not necessary to set the bending portion 340, but only set the washer 350, which is not limited to this.

As shown in Figure 3, based on the structural design of the second accommodating cavity 330 provided with the washer 350, in an embodiment of the present disclosure, the valve core seat assembly 300 is illustrated as comprising only the seat body 310 and not the liner 320. On this basis, the upper end of the seat body 310 is the upper end of the valve core seat assembly 300, and the lower end of the seat body 310 is the lower end of the valve core seat assembly 300. At this time, the bending portion 340 is formed by bending the lower end of the seat body 310, and the washer 350 is fixed to the seat body 310 and located in the second accommodating cavity 330. In some embodiments, when the valve core seat assembly 300 further includes the liner 320, the opening at the lower end of the liner 320 (i.e. the lower end opening 360 of the valve core seat assembly 300) is bent inward to form a bending portion 340, and the washer 350 can be fixed to the liner 320 and located in the second accommodating cavity 330. The washer 350 is provided above and adjacent to the bending portion 340 along the axial direction X and is not limited to this.

As shown in Figures 2 and 3, in an embodiment of the present application, the first accommodating cavity 210 may have a second step surface S2 facing upwards along the axial direction X, and the valve core seat assembly 300 may have a third step surface S3 facing downwards along the axial direction X. On this basis, the second step surface S2 is abutted against and matched with the third step surface S3 to limit the position of the valve core seat assembly 300 in the first accommodating cavity 210 of the piston 200. The valve core seat assembly 300 is fixed and limited to prevent it from falling off and optimize the fixing effect of the valve core seat assembly 300.

As shown in Figures 2 and 3, based on the structural design, which the first accommodating cavity 210 and the valve core seat assembly 300 have the second step surface S2 and the third step surface S3 abut against and matched with each other, in an embodiment of the present application, the piston 200 has a central hole 220 which is communicated to the lower end of the first accommodating cavity 210. On this basis, the aperture of the central hole 220 is smaller than the inner diameter of the first accommodating cavity 210, so as to form the second step surface S2 at the lower end of the first accommodating cavity 210. On this basis, the lower end opening 360 of the valve core seat assembly 300 is bent inward to form the bending portion 340, and the lower surface of the bending portion 340 facing downwards along the axial direction X defines the third step surface S3.

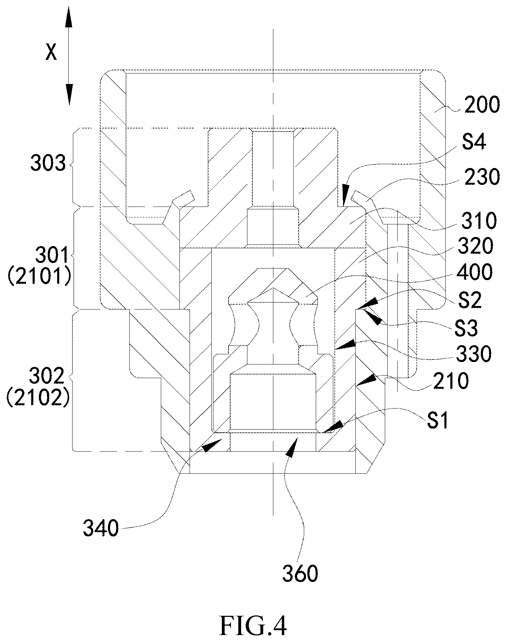

Referring to Figure 4, which is a representative enlarged schematic view of a portion of the structure of the electromagnetic valve of the present disclosure in another exemplary embodiment, and specifically illustrates the assembly structure of the piston 200, valve core seat assembly 300, and valve core 400 of the electromagnetic valve.

As shown in Figure 4, based on the structural design, which the first accommodating cavity 210 and the valve core seat assembly 300 have the second step surface S2 and the third step surface S3 abut against and matched with each other, in an embodiment of the present application, the first accommodating cavity 210 has a first cavity body 2101 and a second cavity body 2102 arranged up and down along the axial direction X, and the inner diameter of the second cavity body 2102 is smaller than that of the first cavity body 2101, so that the connection portion between the first cavity body 2101 and the second cavity body 2102 forms the second step surface S2. On this basis, the valve core seat assembly 300 can have a first part 301 and a second part 302 arranged up and down along the axial direction X, and the outer diameter of the second part 302 is smaller than that of the first part 301 to form the third step surface S3 at the connection portion between the first part 301 and the second part 302. Based on this, unlike the structural design of setting the third step surface S3 at the lower end of the valve core seat assembly 300 in the embodiments shown in Figures 2 and 3, in the embodiment shown in Figure 4, the third step surface S3 is set in the middle portion of the valve core seat assembly 300, and the middle portion refers to the portion of the valve core seat assembly 300 except for the upper and lower ends, and is not limited to the middle position.

As shown in Figures 2 and 3, the valve core seat assembly 300 has a third part 303 and a first part 301 arranged up and down along the axial direction X, and the outer diameter of the third part 303 is smaller than that of the first part 301 to form a fourth step surface S4 facing upwards along the axial direction X at the connection portion between the first part 301 and the third part 303. On this basis, the piston 200 is provided with an extension 230 at the top opening perimeter of the first accommodating cavity 210, which extension 230 is riveted onto the fourth step surface S4 to limit the valve core seat assembly 300 and prevent it from moving upwards. In addition, the first part 301 and the third part 303 shown in Figures 2 and 3 are named based on the definition that the valve core seat assembly 300 has the first part 301 and the second part 302 in the embodiment shown in Figure 4, in order to distinguish the different parts of the valve core seat assembly 300 in different embodiments of the present specification. In other words, in the embodiments shown in Figures 2 and 3, the valve core seat assembly 300 only has the first part 301 and the third part 303, while in the embodiment shown in Figure 4, the valve core seat assembly 300 has the first part 301, the second part 302, and the third part 303, which is hereby explained.

As shown in Figures 2 and 3, based on the structural design of the valve core seat assembly 300 having the first part 301 and the third part 303, in one embodiment disclosed herein, the third part 303 of the valve core seat assembly 300 can extend out of the first accommodating cavity 210.

**In** summary, the electromagnetic valve of the present disclosure is provided with the first step surface S1 in the second accommodating cavity 330 of the valve core seat assembly 300, thereby utilizing the first step surface S1 to abut against the lower end of the valve core 400 when the valve core 400 is located at the lower end of the second accommodating cavity 330. Due to the above structural design, the electromagnetic valve of the present disclosure can use the first step surface S1 of the valve core seat assembly 300 to limit the position of the valve core 400, avoid the valve core 400 directly abutting against the piston 200, reduce the impact of the valve core 400 on the piston 200, extend the service life of the mechanism, and also prevent the valve core 400 from falling into the system and affecting the normal operation of the system.

Although the present disclosure has been described with reference to several typical embodiments, it should be understood that the terms used are illustrative and exemplary rather than restrictive. As the present disclosure can be implemented in various forms, it should be understood that the above embodiments are not limited to any of the aforementioned details, but should be widely interpreted within the scope limited by the accompanying claims. Therefore, all changes and modifications falling within the scope of the claims or their equivalents should be covered by the accompanying claims.

## Claims

1. An electromagnetic valve, comprising a piston (200), a valve core seat assembly (300) and a valve core (400), the piston (200) is provided with a first accommodating cavity (210), the valve core seat assembly (300) is fixed in the first accommodating cavity (210) and provided with a second accommodating cavity (330) opening at the lower end, the valve core (400) can be movably provided in the second accommodating cavity (330) in the axial direction (X); wherein,
the second accommodating cavity (330) is provided with a first step surface (S1) facing upwards in the axial direction (X), the first step surface (S1) is configured to abut against a lower end of the valve core (400) when the valve core (400) is located at a lower end of the second accommodating cavity (330);
the electromagnetic valve is **characterized in that** the valve core seat assembly (300) has a third part (303) and a first part (301) arranged up and down along the axial direction (X), and an outer diameter of the third part (303) is smaller than an outer diameter of the first part (301) to form a fourth step surface (S4) facing upwards along the axial direction (X) at the connection portion between the first part (301) and the third part (303); wherein, the piston (200) is provided with an extension (230) at a top opening perimeter of the first accommodating cavity (210), the extension (230) is configured to be riveted and pressed onto the fourth step surface (S4).

2. The electromagnetic valve according to claim 1, wherein a lower end opening (360) of the valve core seat assembly (300) is bent inward to form a bending portion (340), and an upper surface of the bending portion (340) facing upwards along the axial direction (X) defines the first step surface (S1).

3. The electromagnetic valve according to claim 1, wherein a washer (350) is provided in the second accommodating cavity (330) at a position adjacent to a lower end opening (360) of the second accommodating cavity (330), and an upper surface of the washer (350) facing upwards along the axial direction (X) defines the first step surface (S1).

4. The electromagnetic valve according to claim 3, wherein a lower end opening (360) of the valve core seat assembly (300) is bent inward to form a bending portion (340), and the washer (350) is positioned above and adjacent to the bending portion (340) along the axial direction (X).

5. The electromagnetic valve according to any one of claims 1-4, wherein the first accommodating cavity (210) has a second step surface (S2) facing upwards along the axial direction (X), the valve core seat assembly (300) has a third step surface (S3) facing downwards along the axial direction (X), and the second step surface (S2) is abutted against and matched with the third step surface (S3).

6. The electromagnetic valve according to claim 5, wherein the piston (200) has a central hole (220), and the central hole (220) is communicated to a lower end of the first accommodating cavity (210); wherein, an aperture of the central hole (220) is smaller than an inner diameter of the first accommodating cavity (210) to form the second step surface (S2) at the lower end of the first accommodating cavity (210); wherein, a lower end opening (360) of the valve core seat assembly (300) is bent inward to form a bending portion (340), and a lower surface of the bending portion (340) facing downwards along the axial direction (X) defines the third step surface (S3).

7. The electromagnetic valve according to claim 5, wherein the first accommodating cavity (210) has a first cavity body (2101) and a second cavity body (2102) arranged up and down along the axial direction (X), and an inner diameter of the second cavity body (2102) is smaller than an inner diameter of the first cavity body (2101) to form the second step surface (S2) at the connection portion between the first cavity body (2101) and the second cavity body (2102); wherein, the valve core seat assembly (300) has a first part (301) and a second part (302) arranged up and down along the axial direction (X), and an outer diameter of the second part (302) is smaller than an outer diameter of the first part (301) to form the third step surface (S3) at the connection portion between the first part (301) and the second part (302).

8. The electromagnetic valve according to claim 1, wherein the third part (303) of the valve core seat assembly (300) extends out of the first accommodating cavity (210).

9. The electromagnetic valve according to any one of claims 1-4, wherein the valve core seat assembly (300) comprises a seat body (310) and a liner (320) arranged adjacent to each other from top to bottom, the seat body (310) and the liner (320) are jointly fixed in the first accommodating cavity (210) and jointly define the second accommodating cavity (330), the upper end of the seat body (310) is the upper end of the valve core seat assembly (300), and the lower end of the liner (320) is the lower end of the valve core seat assembly (300).

## Patentansprüche

1. Elektromagnetisches Ventil, umfassend einen Kolben (200), eine Ventilkernsitzbaugruppe (300) und einen Ventilkern (400), wobei der Kolben (200) mit einem ersten Aufnahmehohlraum (210) versehen ist, die Ventilkernsitzbaugruppe (300) in dem ersten Aufnahmehohlraum (210) fixiert und mit einem zweiten Aufnahmehohlraum (330) versehen ist, der sich an dem unteren Ende öffnet, wobei der Ventilkern (400) in Axialrichtung (X) bewegbar in dem zweiten Aufnahmehohlraum (330) vorgesehen sein kann, wobei
der zweite Aufnahmehohlraum (330) mit einer ersten Stufenoberfläche (S1) versehen ist, die in Axialrichtung (X) nach oben gewandt ist, wobei die erste Stufenoberfläche (S1) ausgelegt ist, um an einem unteren Ende des Ventilkerns (400) anzuliegen, wenn sich der Ventilkern (400) an einem unteren Ende des zweiten Aufnahmehohlraums (330) befindet;
das elektromagnetische Ventil **dadurch gekennzeichnet ist, dass** die Ventilkernsitzbaugruppe (300) ein drittes Teil (303) und ein erstes Teil (301) aufweist, die entlang der Axialrichtung (x) oben und unten angeordnet sind, und ein Außendurchmesser des dritten Teils (303) kleiner als ein Außendurchmesser des ersten Teils (301) ist, sodass eine vierte Stufenoberfläche (S4) gebildet wird, die entlang der Axialrichtung (X) an dem Verbindungsabschnitt zwischen dem ersten Teil (301) und dem dritten Teil (303) nach oben gewandt ist, wobei der Kolben (200) mit einer Verlängerung (230) an einem oberseitigen Öffnungsumfang des ersten Aufnahmehohlraums (210) angeordnet ist und die Verlängerung (230) ausgelegt ist, um auf die vierte Stufenoberfläche (S4) aufgenietet und aufgepresst zu werden.

2. Elektromagnetisches Ventil nach Anspruch 1, wobei eine untere Endöffnung (360) der Ventilkernsitzbaugruppe (300) nach innen gebogen ist, sodass ein Biegeabschnitt (340) gebildet wird, und eine obere Oberfläche des Biegeabschnitts (340), die entlang der Axialrichtung (X) nach oben gewandt ist, die erste Stufenoberfläche (S1) definiert.

3. Elektromagnetisches Ventil nach Anspruch 1, wobei eine Unterlegscheibe (350) in dem zweiten Aufnahmehohlraum (330) an einer zu einer unteren Endöffnung (360) des zweiten Hohlraums (330) benachbarten Position vorgesehen ist und eine obere Oberfläche der Unterlegscheibe (350), die entlang der Axialrichtung (X) nach oben gewandt ist, die erste Stufenoberfläche (S1) definiert.

4. Elektromagnetisches Ventil nach Anspruch 3, wobei eine untere Endöffnung (360) der Ventilkernsitzbaugruppe (300) nach innen gebogen ist, sodass ein Biegeabschnitt (340) gebildet wird, und die Unterlegscheibe (350) entlang der Axialrichtung (X) oberhalb des Biegeabschnitts (340) und benachbart zu diesem positioniert ist.

5. Elektromagnetisches Ventil nach einem der Ansprüche 1-4, wobei der erste Aufnahmehohlraum (210) eine zweite Stufenoberfläche (S2) aufweist, die entlang der Axialrichtung (X) nach oben gewandt ist, die Ventilkernsitzbaugruppe (300) eine dritte Stufenoberfläche (S3) aufweist, die entlang der Axialrichtung (X) nach unten gewandt ist, und die zweite Stufenoberfläche (S2) an der dritten Stufenoberfläche (S3) anliegt und mit dieser zusammenpasst.

6. Elektromagnetisches Ventil nach Anspruch 5, wobei der Kolben (200) ein zentrales Loch (220) aufweist und das zentrale Loch (220) mit einem unteren Ende des ersten Aufnahmehohlraums (210) in Kommunikation gebracht ist, wobei eine lichte Weite des zentralen Lochs (220) kleiner als ein Innendurchmesser des ersten Aufnahmehohlraums (210) ist, sodass die zweite Stufenoberfläche (S2) an dem unteren Ende des ersten Aufnahmehohlraums (210) gebildet wird, wobei eine untere Endöffnung (360) der Ventilkernsitzbaugruppe (300) nach innen gebogen ist, sodass ein Biegeabschnitt (340) gebildet wird, und eine untere Oberfläche des Biegeabschnitts (340), die entlang der Axialrichtung (X) nach unten gewandt ist, die dritte Stufenoberfläche (S3) bildet.

7. Elektromagnetisches Ventil nach Anspruch 5, wobei der erste Aufnahmehohlraum (210) einen ersten Hohlraumkörper (2101) und einen zweiten Hohlraumkörper (2102) aufweist, die entlang der Axialrichtung (X) oben und unten angeordnet sind, und ein Innendurchmesser des zweiten Hohlraumkörpers (2102) kleiner als ein Innendurchmesser des ersten Hohlraumkörpers (2101) ist, sodass die zweite Stufenoberfläche (S2) an dem Verbindungsabschnitt zwischen dem ersten Hohlraumkörper (2101) und dem zweiten Hohlraumkörper (2102) gebildet wird, wobei die Ventilkernsitzbaugruppe (300) ein erstes Teil (301) und ein zweites Teil (302) aufweist, die entlang der Axialrichtung (X) oben und unten angeordnet sind, und ein Außendurchmesser des zweiten Teils (302) kleiner als ein Außendurchmesser des ersten Teils (301) ist, sodass die dritte Stufenoberfläche (S3) an dem Verbindungsabschnitt zwischen dem ersten Teil (301) und dem zweiten Teil (302) gebildet wird.

8. Elektromagnetisches Ventil nach Anspruch 1, wobei sich das dritte Teil (303) der Ventilkernsitzbaugruppe (300) aus dem ersten Aufnahmehohlraum (210) heraus erstreckt.

9. Elektromagnetisches Ventil nach einem der Ansprüche 1-4, wobei die Ventilkernsitzbaugruppe (300) einen Sitzkörper (310) und eine Buchse (320) aufweist, die von oben nach unten aneinander benachbart angeordnet sind, der Sitzkörper (310) und die Buchse (320) gemeinsam in dem ersten Aufnahmehohlraum (210) fixiert sind und gemeinsam den zweiten Aufnahmehohlraum (330) bilden, das obere Ende des Sitzkörpers (310) das obere Ende der Ventilkernsitzbaugruppe (300) ist und das untere Ende der Buchse (320) das untere Ende der Ventilkernsitzbaugruppe (300) ist.

## Revendications

1. Électrovanne, comprenant un piston (200), un ensemble siège-noyau de vanne (300) et un noyau de vanne (400), le piston (200) est pourvu d'une première cavité de logement (210), l'ensemble siège-noyau de vanne (300) est fixé dans la première cavité de logement (210) et pourvu d'une seconde cavité de logement (330) s'ouvrant au niveau de son extrémité inférieure, le noyau de vanne (400) pouvant être logée de manière mobile dans la seconde cavité de logement (330) dans la direction axiale (X) ; dans laquelle,
la seconde cavité de logement (330) est pourvue d'une première surface d'épaulement (S1) orientée vers le haut dans la direction axiale (X), la première surface d'épaulement (S1) étant configurée pour venir en butée contre une extrémité inférieure du noyau de vanne (400) lorsque le noyau de vanne (400) est situé au niveau de l'extrémité inférieure de la seconde cavité de logement (330) ;
l'électrovanne est **caractérisée en ce que** l'ensemble siège-noyau de vanne (300) comporte une troisième partie (303) et une première partie (301) disposées l'une au-dessus de l'autre dans la direction axiale (X), et le diamètre extérieur de la troisième partie (303) est inférieur au diamètre extérieur de la première partie (301) afin de former une quatrième surface d'épaulement (S4) orientée vers le haut le long de la direction axiale (X) au niveau de la partie de raccordement entre la première partie (301) et la troisième partie (303) ; dans laquelle, le piston (200) est pourvu d'un prolongement (230) au niveau du périmètre d'ouverture supérieur de la première cavité de logement (210), le prolongement (230) étant configuré pour être riveté et pressé contre la quatrième surface d'épaulement (S4).

2. Électrovanne selon la revendication 1, dans laquelle une ouverture d'extrémité inférieure (360) de l'ensemble siège-noyau de vanne (300) est courbée vers l'intérieur pour former une partie coudée (340), et une surface supérieure de la partie coudée (340) orientée vers le haut dans la direction axiale (X) définit la première surface d'épaulement (S1).

3. Électrovanne selon la revendication 1, dans laquelle une rondelle (350) est prévue dans la seconde cavité de logement (330) au niveau d'une position adjacente à une ouverture d'extrémité inférieure (360) de la seconde cavité de logement (330), et une surface supérieure de la rondelle (350) orientée vers le haut le long de la direction axiale (X) définit la première surface d'épaulement (S1).

4. Électrovanne selon la revendication 3, dans laquelle une ouverture d'extrémité inférieure (360) de l'ensemble siège-noyau de vanne (300) est courbée vers l'intérieur pour former une partie coudée (340), et la rondelle (350) est positionnée au-dessus et adjacente à la partie coudée (340) dans la direction axiale (X).

5. Électrovanne selon l'une quelconque des revendications 1 à 4, dans laquelle la première cavité de logement (210) présente une deuxième surface d'épaulement (S2) orientée vers le haut dans la direction axiale (X), l'ensemble siège-noyau de vanne (300) comporte une troisième surface d'épaulement (S3) orientée vers le bas dans la direction axiale (X), et la deuxième surface d'épaulement (S2) est en butée contre la troisième surface d'épaulement (S3) et s'y adapte.

6. Électrovanne selon la revendication 5, dans laquelle le piston (200) comporte un trou central (220), et le trou central (220) communique avec une extrémité inférieure de la première cavité de logement (210) ; dans laquelle l'ouverture du trou central (220) est plus petite que le diamètre intérieur de la première cavité de logement (210) afin de former la deuxième surface d'épaulement (S2) au niveau de l'extrémité inférieure de la première cavité de logement (210) ; dans laquelle une ouverture d'extrémité inférieure (360) de l'ensemble siège-noyau de vanne (300) est courbée vers l'intérieur pour former une partie coudée (340), et une surface inférieure de la partie coudée (340), orientée vers le bas dans la direction axiale (X), définit la troisième surface d'épaulement (S3).

7. Électrovanne selon la revendication 5, dans laquelle la première cavité de logement (210) comporte un premier corps de cavité (2101) et un second corps de cavité (2102) disposés l'un au-dessus de l'autre dans la direction axiale (X), et le diamètre intérieur du second corps de cavité (2102) est inférieur au diamètre intérieur du premier corps de cavité (2101) afin de former la deuxième surface d'épaulement (S2) au niveau de la partie de raccordement entre le premier corps de cavité (2101) et le second corps de cavité (2102) ; dans laquelle l'ensemble siège-noyau de vanne (300) comporte une première partie (301) et une deuxième partie (302) disposées l'une au-dessus de l'autre dans la direction axiale (X), et le diamètre extérieur de la deuxième partie (302) est inférieur au diamètre extérieur de la première partie (301) afin de former la troisième surface d'épaulement (S3) au niveau de la partie de raccordement entre la première partie (301) et la deuxième partie (302).

8. Électrovanne selon la revendication 1, dans laquelle la troisième partie (303) de l'ensemble siège-noyau de vanne (300) s'étend hors de la première cavité de logement (210).

9. Électrovanne selon l'une quelconque des revendications 1 à 4, dans laquelle l'ensemble siège-noyau de vanne (300) comprend un corps de siège (310) et une chemise (320) disposés de manière adjacente l'un à l'autre de haut en bas, le corps de siège (310) et la chemise (320) étant fixés conjointement dans la première cavité de logement (210) et définissent conjointement la seconde cavité de logement (330), l'extrémité supérieure du corps de siège (310) constituant l'extrémité supérieure de l'ensemble siège-noyau de vanne (300), et l'extrémité inférieure de la chemise (320) constituant l'extrémité inférieure de l'ensemble siège-noyau de vanne (300).
